(19) Europäisches Patentamt
European Patent Office
Office européen des brevets

(11) Veröffentlichungsnummer: **0 113 920**
**A2**

(12) # EUROPÄISCHE PATENTANMELDUNG

(21) Anmeldenummer: **83113225.3**

(22) Anmeldetag: **30.12.83**

(51) Int. Cl.³: **D 01 F 1/06**, C 09 B 67/34, C 09 B 23/00

(30) Priorität: **14.01.83 DE 3301024**

(43) Veröffentlichungstag der Anmeldung: **25.07.84**
**Patentblatt 84/30**

(84) Benannte Vertragsstaaten: **CH DE FR GB LI**

(71) Anmelder: **BAYER AG, Konzernverwaltung RP**
***Patentabteilung, D-5090 Leverkusen 1 Bayerwerk (DE)***

(72) Erfinder: **Bara, Helmut, Waldstrasse 9,**
**D-5653 Leichlingen 2 (DE)**
Erfinder: **Wiesel, Manfred, Dr., Am Steinberg 49,**
**D-5090 Leverkusen 1 (DE)**

(54) **Verfahren zur Herstellung von stabilen Lösungen kationischer Methinfarbstoffe und ihre Verwendung zum Spinnfärben.**

(57) Mineralsalzfreie, gebrauchsfertige Lösungen von kationischen Methinfarbstoffen, die zum Spinnfärben von sauer modifizierten Synthesefasern geeignet sind, werden durch Kondensation von aromatisch-isocyclischen oder -heterocyclischen oder araliphatischen Aldehyden und Methylen- oder Aminogruppen enthaltenden Verbindungen in einem für die Spinnfärbung geeigneten organischen Lösemittel in Gegenwart einer freien Sulfon- oder Phosphorsäure hergestellt.

EP 0 113 920 A2

BAYER AKTIENGESELLSCHAFT 5090 Leverkusen, Bayerwerk

Zentralbereich
Patente, Marken und Lizenzen Mi/by-c

Verfahren zur Herstellung von stabilen Lösungen kationischer Methinfarbstoffe und ihre Verwendung zum Spinnfärben

Zum Spinnfärben von sauer modifizierten Synthesefasern, beispielsweise von sauer modifizierten Polyamid- und Polyesterfasern und von Polyacrylnitrilfasern, geeignete Lösungen kationischer Methinfarbstoffe wurden bisher durch Lösen der fertigen Farbstoffe in einem mit dem Spinnsystem verträglichen Lösungsmittel hergestellt. Die aus der Herstellung stammenden Fremdsalze müssen sorgfältig entfernt werden, da sie das Spinndüsensystem verstopfen. Insbesondere können Chloride zu Korrosionsproblemen führen.

Es wurde nun gefunden, daß man mineralsalzfreie, gebrauchsfertige Spinnlösungen von kationischen Methinfarbstoffen erhält, wenn man ihre Herstellung durch Kondensation von aromatisch-isocyclischen oder -heterocyclischen oder araliphatischen Aldehyden und Methylen oder Aminogruppen enthaltenden Verbindungen in einem für die Spinnfärbung

geeigneten organischen Lösemittel in Gegenwart einer freien Sulfon- oder Phosphonsäure herstellt.

Geeignete organische Lösemittel sind vorzugsweise die Amide niederer aliphatischer Carbonsäuren, insbesondere Dimethyl- und Diethylformamid und Dimethylacetamid.

Nach dem neuen Verfahren werden vorzugsweise Lösungen von Farbstoffen der allgemeinen Formel

$$\left[ A - CH = CH -\!\left(\underset{R}{N}\right)_{m}\!- B \right]^{(+)} \quad X^{(-)} \qquad (I)$$

worin

m für 0 oder 1,

A für einen isocyclischen oder heterocyclischen aromatischen Rest oder einen Rest der Formel

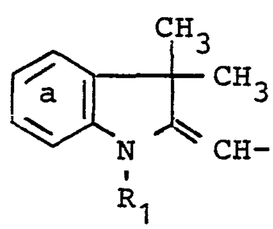

$R_1$ für Alkyl, Alkenyl oder Aralkyl,

B für einen isocyclischen oder heterocyclischen aromatischen Rest oder einen Rest der Formel

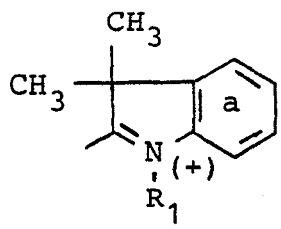

R für Wasserstoff, Alkyl oder Aralkyl oder für Alkylen, das mit B in der o-Stellung zum Stickstoff verbunden ist,

X für ein Anion der Formel

$Y\ SO_3^{(-)}$ oder 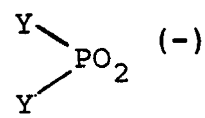

und

Y . für Alkyl, Aryl oder Alkoxy

stehen, worin A oder B eine positive Ladung trägt, und worin a, A, B, R, $R_1$, $R_2$ und Y durch nichtionische Reste substituiert sein können,

durch Kondensation von Aldehyden der Formel

A-CHO (II)

mit Verbindungen der Formel

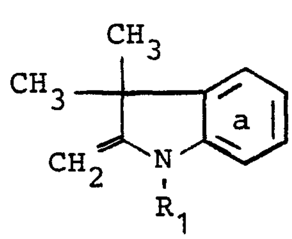

(III)

oder durch Kondensation von Aldehyden der Formel

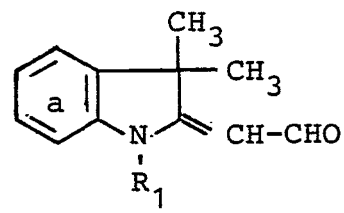

(IV)

mit Aminen der Formel

NH-B
R

(V)

worin

A, B, a, R und $R_1$ die in Formel (I) angegebene Bedeutung haben,

in Gegenwart von Säuren der Formel

Y $SO_3H$ (VI) oder

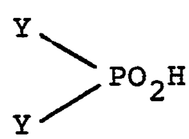

(VII)

in welcher

Y die vorstehend angegebene Bedeutung hat,

im organischen Lösungsmittel hergestellt.

Als Säuren sind besonders diejenigen der Formel (VI) und (VII) zu nennen, worin

Y für einen Alkoxyrest mit 1-4 C-Atomen, einen gegebenenfalls durch 1-3 Alkylreste mit 1-4 C-Atomen, Alkoxyreste mit 1-4 C-Atomen, Halogen oder Hydroxyl substituierter Phenylrest oder einen $C_1$- bis $C_4$-Alkylrest steht.

Ganz besonders sind Säuren der Formel (VI) bevorzugt, worin

Y für Methyl, Phenyl oder p-Tolyl steht.

Bevorzugte Gruppe von Farbstoffen, die nach dem neuen Verfahren darstellbar sind, entsprechen den allgemeinen Formeln

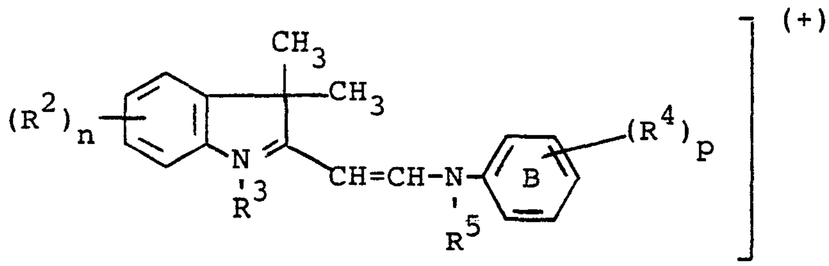

$YSO_3^{(-)}$ (VIII)

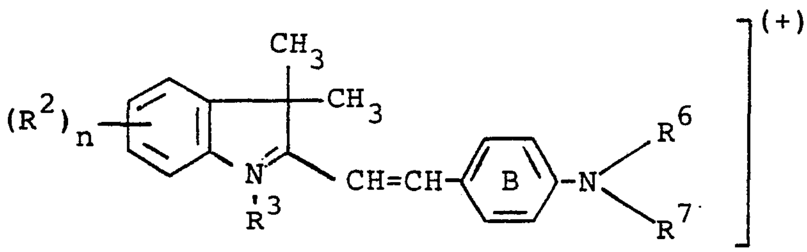

$YSO_3^{(-)}$ (IX)

und

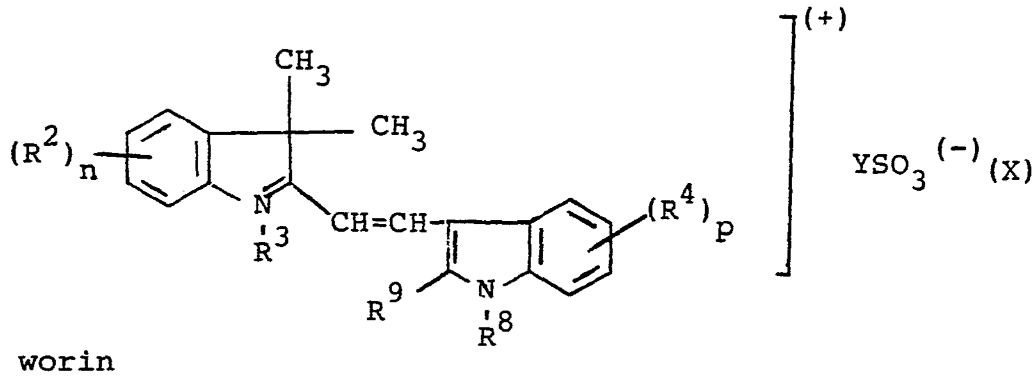

worin

$R^2$ für Wasserstoff, einen Alkylrest mit 1 bis 4 C-Atomen, Halogen, Alkoxy mit 1 bis 4 C-Atomen, Phenoxy, Benzyloxy, Benzyl, Carboxyl, Phenoxyethyl, Phenoxyethoxy, einen Carbonsäurealkylester mit 1 bis 4 C-Atomen, eine gegebenenfalls durch 1 oder 2 $C_1$- bis $C_4$-Alkylreste substituierte Carbonamidgruppe, eine gegebenenfalls durch 1 oder 2 $C_1$- bis $C_4$-Alkylreste substituierte Sulfonamidgruppe, Alkylsulfonyl mit 1 bis 4 C-Atomen, Phenylsulfonyl, eine Cyan-, Trifluormethyl-, Acetyl- oder Benzoylgruppe,

$R^3$ für einen gegebenenfalls durch Hydroxy, Alkoxy, Acyloxy, Halogen, Cyan, Carboxy, $C_1$-$C_4$-Carbalkoxy, Carbonamido oder Acetyl substituierten Alkylrest mit 1 bis 4 C-Atomen stehen,

$R^4$ die gleiche Bedeutung wie $R^2$ hat oder zusammen mit dem Benzolring B ein Tetralin-, Naphthalin- oder Benzdioxanringsystem bildet,

0113920

$R^6$ für Wasserstoff oder einen Rest mit der gleichen Bedeutung wie $R^3$,

$R^7$ die gleiche Bedeutung wie $R^6$ haben kann, oder für gegebenenfalls durch Alkyl oder Alkoxy mit 1 bis 4 C-Atomen substituiertes Phenyl steht, oder für einen Alkylsubstituenten, der einen 5- oder 6-gliedrigen Ring zur benachbarten Stellung des Arylringes B schließt, wobei dieser dabei gebildete heterocyclische 5- oder 6-gliedrige Ring gegebenenfalls alkylsubstituiert oder mit oder mit einem weiteren carbocyclischen Ring kondensiert sein kann, steht,

$R^8$ für Wasserstoff, $C_1$ bis $C_4$-Alkyl,

$R^9$ für Wasserstoff, $C_1$ bis $C_4$-Alkyl, gegebenenfalls durch Alkyl mit 1 bis 4 C-Atomen substituiertes Phenyl stehen,

Y die obengenannte Bedeutung hat und

n und p für 1 oder 2 stehen.

Von den Farbstoffen der Formeln (VIII), (IX) und (X) sind insbesondere solche zu nennen, worin

n und p für 1 stehen,

$R^2$ für Wasserstoff, Chlor, Methyl, Methoxy, Ethoxy, Benzyl, Phenoxy, Benzyloxy oder Carbomethoxy,

$R^3$ für Methyl,

$R^4$ für Wasserstoff, Methyl, Methoxy, Ethoxy, Benzyl, Benzyloxy, Phenoxy, Chlor, $C_1$- bis $C_2$-alkylsubstituiertes Carbonamid oder zusammen mit dem Ring B für ein Naphthalin-, Tetrahydronaphthalin- oder Benzdioxanringsystem,

$R^5$ für Wasserstoff oder bevorzugt für einen Alkylrest, der zur o-Stellung des Ringes B einen 5- oder 6-Ring schließt, der durch 1 bis 3 $C_1$- bis $C_2$-Alkylgruppen substituiert oder mit einem Cyclohexanring kondensiert sein kann, stehen,

$R^6$ für Wasserstoff, Methyl oder Ethyl,

$R^7$ für Wasserstoff, Methyl, Ethyl, Phenyl, durch Alkyl oder Alkoxy mit 1 bis 2 C-Atomen substituiertes Phenyl oder einen Phenylrest, der orthoständig zum Ring B kondensiert ist,

$R^8$ für Wasserstoff, Methyl oder Ethyl,

$R^9$ für Methyl oder Phenyl stehen und

Y die gleiche Bedeutung wie oben hat.

Unter nichtionischen Substituenten sind im Sinne der vorliegenden Erfindung die in der Farbstoffchemie üblichen und unter gebräuchlichen Herstellungs- und Verwendungsbedingungen nicht dissoziierenden Substituenten zu verstehen, wie Halogen, z.B. Fluor, Chlor, Brom, Hydroxy, Alkyl, Alkenyl, Aryl, Aralkyl, Aryloxy, Alkoxy oder Hydroxyalkoxy, Cycloalkoxy, Aralkoxy, Aryloxyalkoxy, Alkylthio, Aralkylthio, Arylthio, Nitro, Cyan, Formyl, Alkylcarbonyl, Arylcarbonyloxy, Alkylcarbonyloxy, Alkoxycarbonyloxy, Alkylcarbonylamino, Alkylaminocarbonyloxy, Arylcarbonyl, Aralkylcarbonyl, Arylsulfonylamino, Aralkylsulfonylamino, Alkylsulfonylamino, Ureido, N-Alkyl-ureido, Aryloxycarbonylamino, Alkyloxycarbonylamino, Carbamoyl, N-Alkyl-carbamoyl, N,N-Dialkyl-carbamoyl, N-Alkyl-N-arylcarbamoyl, Sulfamoyl, N-Alkyl-sulfamoyl, N,N-Dialkylsulfamoyl, Alkylsulfonyl, Alkenylsulfonyl, Arylsulfonyl, Aralkylsulfonyl, Aryloxysulfonyl, Aryloxycarbonyl, Alkoxycarbonyl, Aralkoxycarbonyl, Mono-, Di- oder Trialkylsulfamidin, Alkylarylsulfamidin, Alkylcycloalkylsulfamidin und Arylazo. Auch Polyglykoletherreste mit Halogen-, Hydroxy- oder Alkyloxysubstituenten sind geeignet.

In den Formeln und in den vorstehend genannten nichtionischen Substituenten sind unter Alkylresten insbesondere $C_1$- bis $C_8$-Alkylreste und unter Alkenylresten insbesondere $C_3$- bis $C_5$-Alkenylreste zu verstehen.

Geeignete Arylreste sind insbesondere der Phenyl- oder Naphthylrest.

0113920

Geeignete Aralkylreste sind insbesondere der Benzyl-, α- oder β-Phenylethyl-, α-, β- oder γ-Phenylpropylrest. Unter Cycloalkyl wird vorzugsweise Cyclohexyl verstanden. Durch Ankondensation weiterer Ringe an die Ringe A und B entstehen beispielsweise Naphthalin-, Tetralin- oder Benzdioxansysteme.

Die aliphatischen und isocyclischen Reste können ihrerseits die vorstehend genannten nichtionischen Substituenten tragen.

Unter Acyl wird beispielsweise Acetyl, Propionyl, Benzoyl oder Carbamoyl verstanden.

Der Vorteil des neuen Verfahrens besteht darin, daß man - ohne eine wäßrige Phase zu durchlaufen, aus der der Farbstoff durch Aussalzen, Abfiltrieren und Trocknen isoliert werden und ohne daß der so isolierte Farbstoff wieder zu einer Spinnlösung gelöst und anschließend filtriert werden muß - unmittelbar zu einer anwendbaren Spinn-Flüssigeinstellung gelangt. Bei dem neuen Verfahren fällt daher kein Abwasser an, und das arbeits- und energieaufwendige Trocknen des aus der Lösung isolierten Farbstoffes entfällt.

Es werden Farbstoff-Lösungen erhalten, die sehr hoch konzentriert an Farbsalzen der Formel (I) sind, beispielsweise enthalten sie 10 bis 70 % Farbstoff.

Geeignete Aldehyde der Formel (II) sind beispielsweise 4-Dimethylaminobenzaldehyd, 4-Diethylaminobenzaldehyd, 4-[(2-Chlorethyl)-methylamino]-benzaldehyd, 4-[(2-Chlorethyl)-ethylamino]-benzaldehyd, 4-[Butyl(2-chlorethyl)-amino]-benzaldehyd, 4-[Butyl(2-cyanethyl)amino]-benzaldehyd, 3-[(4-Formyl-phenyl)-methylamino]-propannitril, 4-[(2-Chlorethyl)-ethyl-amino]-2-methylbenzaldehyd, 4-[(2-Cyanethyl)-methyl-amino]-2-methyl-benzaldehyd, 4-[N-Ethyl-N-ß-(4-methoxycarbonylbenzoyloxy)-ethylamino)-2-methylbenzaldehyd, N-Methyl-3-formylcarbazol, N-Ethyl-3-formylcarbazol, 4-(Benzyl-ethylamino)-benzaldehyd, 4-(Benzyl-ethylamino)-2-methylbenzaldehyd, 4[4-Ethoxyphenyl)-ethyl)-amino]-benzaldehyd, 4-[(4-Ethoxyphenyl)-methyl)-amino]-benzaldehyd, 2-Methyl-3-formyl-1H-indol, 1-Methyl-2-phenyl-3-formyl-indol, 1,2-Dimethyl-3-formyl-indol.

Geeignete Verbindungen der Formel III sind beispielsweise 1,3,3-Trimethyl-2-methylen-indolin, 1,3,3,5-Tetramethyl-2-methylen-indolin, 1,3,3-Trimethyl-5-chlor-2-methylen-indolin, 1,3,3-Trimethyl-5-methoxy-2-methylen-indolin, 1,3,3-Trimethyl-5-carboethoxy-3-methylen-indolin, 1,3,3-Trimethyl-5-methylsulfonyl-2-methylen-indolin, 1,3,3-Trimethyl-5-benzyl-2-methylen-indolin, 1,3,3-Trimethyl-5-benzoyloxy-2-methylenindolin, 1,3,3-Trimethyl-5-(4-chlorphenoxy)-2-methylen-indolin, 1,3,3-Trimethyl-7-methoxy-2-methylen-indolin, 1,3,3-Trimethyl-5-chlor-7-methoxy-2-methylen-indolin, 1,3,3-Trimethyl-5,7-dimethoxy-2-methylenindolin, 1,3,3-Trimethyl-7-phenoxy-2-methylen-indolin.

Für das Verfahren geeignete Zwischenprodukte der Formel IV sind beispielsweise: 1,3,3-Trimethyl-2-methylen-indolin-ω-aldehyd, 1,3,3,5-Tetramethyl-2-methylen-indolin-ω-aldehyd, 1,3,3-Trimethyl-5-chlor-2-methylen-indolin-ω-aldehyd, 1,3,3-Trimethyl-5-methoxy-2-methylen-indolin-ω-aldehyd, 1,3,3-Trimethyl-5-carboethoxy-2-methylen-indolin-ω-aldehyd, 1,3,3-Trimethyl-5-methylsulfonyl-2-methylen-indolin-ω-aldehyd, 1,3,3-Trimethyl-5-benzyl-2-methylen-indolin-ω-aldehyd, 1,3,3-Trimethyl-5-benzyloxy-2-methylen-indolin-ω-aldehyd, 1,3,3-Trimethyl-5-(4-chlor-phenoxy)-2-methylen-indolin-ω-aldehyd, 1,3,3-Trimethyl-7-methoxy-2-methylen-indolin-ω-aldehyd, 1,3,3-Trimethyl-5-chlor-7-methoxy-2-methylen-indolin-ω-aldehyd, 1,3,3-Trimethyl-5,7-dimethoxy-2-methylen-indolin-ω-aldehyd, 1,3,3-Trimethyl-7-phenoxy-2-methylen-indolin-ω-aldehyd.

Geeignete Amine der Formel (V) sind beispielsweise: 4-Amino-diphenylether, 4-Amino-4'-methyl-diphenylether, 4-Amino-4'-ethyl-diphenylether, 4-Amino-4'-tert.-butyl-diphenylether, 4-Amino-4'-cyclohexyl-diphenyl-ehter, 4-Amino-2'-methyl-diphenylether, 4-Amino-3'-methyl-diphenylether, 4-Amino-4'-methoxy-diphenylether, 4-Amino-3'-methoxy-diphenylether, 4-Amino-4'-ethoxy-diphenylether, 4-Amino-4'-acetylamino-diphenylether, 4-Amino-4'-hydroxydiphenylether, 4-Amino-4'-nitro-diphenylether, 4-Amino-4'-chlor-diphenylether, 4-Amino-2'-chlordiphenylether, 4-Amino-3'-chlor-diphenylether, 4-Amino-phenyl-α-naphthylether, 4-Aminophenyl-ß-naphthylether, 4-Amino-2',3',5'-trimethyl-diphenylether, 4-Aminophenyl-benzylether, 3-Aminophenyl-benzylether, 2-Aminophenyl-benzylether, 2-Aminodiphenylether, 4-Aminophenyl-4'-methylbenzylether, 4-Aminophenyl-4'-chlorbenzylether, 4-Aminophenyl-2'-chlorbenzylether, 4-Aminophenyl-3',4'-dichlorbenzylether, 4-Aminobenzyl-2',4',5'-trichlorbenzylether, 3-Aminophenyl-4'-methylbenzylether, 3-Aminophenyl-4'-chlorbenzylether, 3-Aminophenyl-2'-chlorbenzylether, 3-Aminophenyl-3',4'-dichlorbenzylether, 3-Aminophenyl-2',4',5'-trichlorbenzylether, 2-Aminophenyl-4'-methylbenzylether, 2-Aminophenyl-4'-chlorbenzylether, 2-Aminophenyl-3',4'-dichlorbenzylether, 2-Aminophenyl-2',4',5'-trichlorbenzylether, 4-Amino-2-methylphenyl-benzylether, 5-Amino-2-methyl-phenyl-benzylether, 2-Amino-5-methyl-phenyl-benzylether, 4-Amino-2-methoxy-phenyl-benzylether, 4-Amino-3-methoxy-phenyl-benzyletherm 4-Amino-3-methyl-phenyl-benzylether, 4-Amino-3-chlor-phenyl-benzylether, 4-Amino-2-chlor-phenyl-benzylether, 4-Amino-2-methyl-phenyl-4'-methylbenzylether, 5-Amino-2-methyl-phenyl-3',4'-dichlorbenzylether, 2-Amino-5-methyl-phenyl-4'-chlorbenzylether, 4-Amino-2-methoxy-phenyl-4'-methylbenzylether, 4-Amino-3-methyl-phenyl-2',4',5'-trichlorbenzylether, Anilin, p-Toluidin, m-Toluidin, o-Anisidin, m-Anisidin, p-Anisidin, o-Phenetidin, p-Phenetidin, 4-Dodecyloxyanilin, 4-Amino-acetanilid, N-Benzoyl-p-phenylendiamin, 2,4-Dimethoxy-anilin, 2,5-Dimethoxy-anilin, 3,4-Dimethoxy-anilin, 2-Chlor-4-amino-anisol, 2,4,5-Trimethyl-anilin, 2,3,5-Trimethyl-anilin, 5-Amino-2-acetylamino-anisol, 6-Amino-3-methoxy-toluol, 3,4-Dicyan-anilin, p-Sulfanilsäureamid, 4-Amino-benzamid, 4-Chlor-anilin,

4-Fluor-anilin, 1,2,3,4-Tetrahydro-5-amino-naphthalin, 4-Amino-2,5-diethoxy-benzoesäureanilid, 4-Amino-2-methyl-5-methoxy-benzanilid, 4-Cyclohexyl-anilin, 2,4-Diethoxyanilin, 1-Amino-naphthalin, 2-Methyl-2,3-dihydro-indol, Hexahydrocarbazol, 2,3,3-Trimethyl-2,3-dihydro-indol, 2,3,3-Trimethyl-5-methoxy-2,3-dihydro-indol, 4-Aminobrenzcatechinethylenether, 6-Amino-benzdioxan, 1,2,3,4-Tetrahydro-6-methoxy-chinolin, 4-Methylamino-phenyl-benzylether, 4-Ethylamino-phenylbenzylether.

Geeignete Säuren der Formeln (VI) und (VII) sind beispielsweise: Benzolsulfonsäure, 2-Methyl-benzolsulfonsäure, 4-Methyl-benzolsulfonsäure, 2,4-Dimethylbenzolsulfonsäure, 2-Chlor-benzolsulfonsäure, 4-Chlor-benzolsulfonsäure, 2,4-Dichlor-benzolsulfonsäure, 4-Hydroxybenzolsulfonsäure, 4-Methoxybenzolsulfonsäure, Naphthalin-1-sulfonsäure, Naphthalin-2-sulfonsäure, Methansulfonsäure, Ethansulfonsäure, Butansulfonsäure, Methylschwefelsäure, Ethylschwefelsäure oder deren Gemische sowie Phosphorsäurediethylester.

Anspruchsgemäß werden die Farbstoffe hergestellt, indem man in das Lösemittel nacheinander entweder zunächst den Aldehyd, dann die organische Säure und schließlich die Base einträgt oder aber Base und Säure vorlegt und dann den Aldehyd zugibt.

Die Reaktionstemperatur wählt man im Bereich zwischen 20°C und 100°C, vorzugsweise zwischen 30°C und 60°C.

Das molare Verhältnis Aldehyd/Base beträgt vorzugsweise 1, wogegen darauf bezogen an organischer Säure 1 bis 2 Äquivalente eingesetzt werden. Die Gesamtkonzentration bezogen auf das Lösemittel kann zwischen 10 % und 70 % liegen.

Die Umsetzung erfolgt überraschend glatt und quantitativ. Man erhält auf diese Weise stabile, konzentrierte, mineralsalzfreie Lösungen von Farbstoffen, die direkt dem Spinnsystem zudosiert werden können.

Beispiel 1

In 450 g Dimethylformamid werden nacheinander 44,4 g p-Dimethylaminobenzaldehyd und 90 g p-Toluolsulfonsäure eingetragen und unter Rühren auf 50°C erwärmt. In die entstandene Lösung tropft man innerhalb 15 Minuten 51 g 1,3,3-Trimethyl-2-methylen-indolin zu und läßt 10 Stunden bei 50°C nachrühren.

Nach dem Abkühlen auf Raumtemperatur wird mit etwa 280 g Dimethylformamid die gebrauchsfertige violette Farbstoff-Lösung eingestellt.

Die Lösung enthält in einer ca. 20 %igen Konzentration den Farbstoff

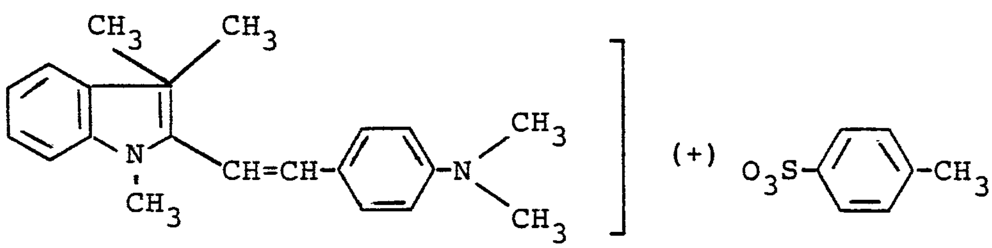

und färbt - der Spinnlösung zudosiert - Polyacrylnitril in blaustichig roten Tönen.

Beispiel 2

In 1245 g Dimethylformamid werden 66,5 g 2-Methyl-indolin und 100 g p-Toluolsulfonsäure verrührt. Bei 35°C werden langsam 101 g Fischers Aldehyd /(1,3,3-Trimethyl-indolin-2-yliden)-acetaldehyd] eingetragen. Nach 2 Stunden bei 35°C ist die Umsetzung vollständig. Nach dem Abkühlen auf Raumtemperatur wird die gelbe Spinnfarbstoff-Lösung mit Dimethylformamid auf die gewünschte Farbstärke eingestellt.

Die Lösung enthält den Farbstoff der Formel

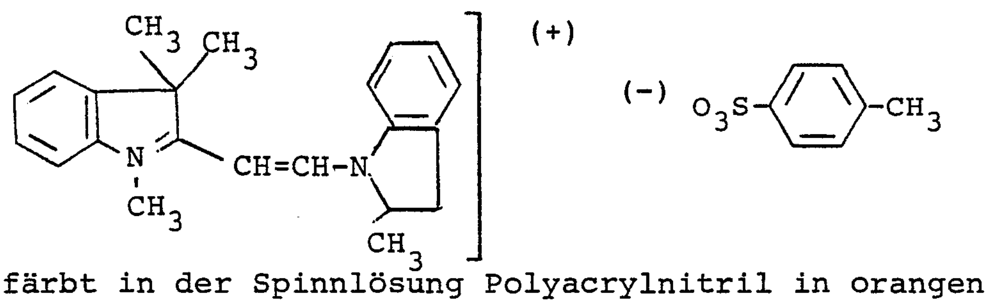

und färbt in der Spinnlösung Polyacrylnitril in orangen Tönen.

Für die nach den geschilderten Verfahren herstellbaren Farbstofflösungen seien beispielhaft genannt:

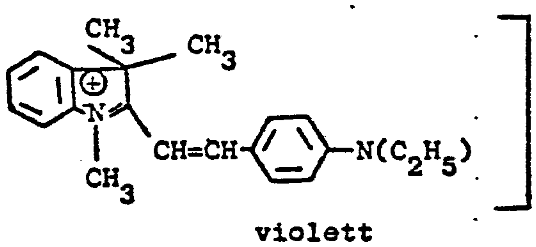
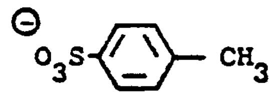

in Dimethylformamid

(analog Beispiel 1)

violett

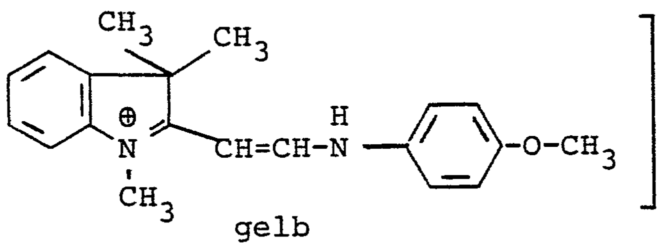
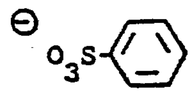

in Dimethylacetamid

(analog Beispiel 2)

gelb

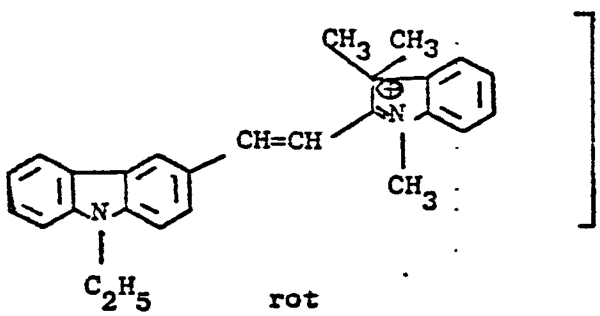
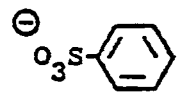

in Dimethylformamid

(analog Beispiel 1)

rot

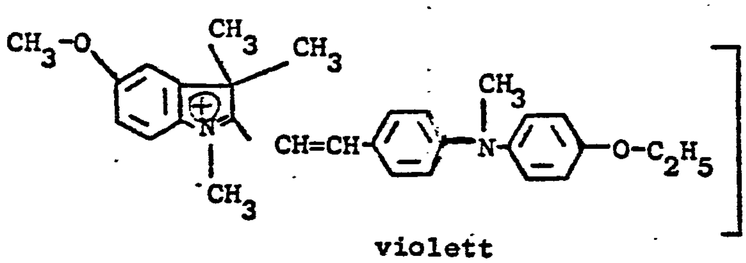
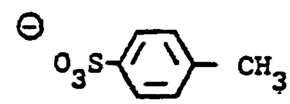

violett

in Dimethyl-
formamid
(analog Beispiel 1)

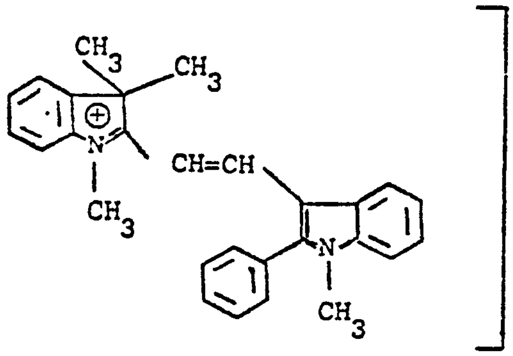

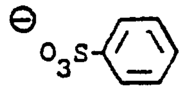

in Dimethylacetamid
(analog Beispiel 1)

Orange

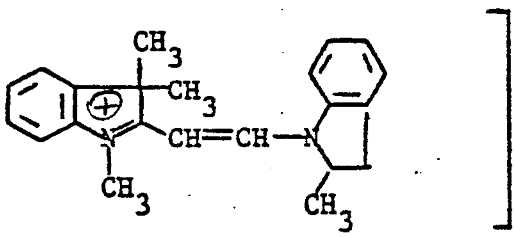

$CH_3SO_3^{\ominus}$

grünstichig gelb

in Dimethylformamid
(analog Beispiel 2)

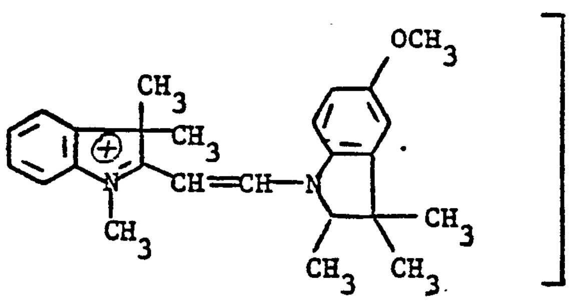

$CH_3SO_3^{\ominus}$,

grünstichig gelb

in Dimethylformamid
(analog Beispiel 2)

0113920

Patentansprüche

1. Verfahren zur Herstellung von Lösungen kationischer Methinfarbstoffe durch Kondensation von aromatisch-isocyclischen oder -heterocyclischen oder araliphatischen Aldehyden und Methylen- oder Aminogruppen enthaltenden Verbindungen, dadurch gekennzeichnet, daß man die Kondensation in einem für die Spinnfärbung geeigneten organischen Lösemittel in Gegenwart einer Sulfon- oder Phosphonsäure durchführt.

2. Verfahren nach Anspruch 1 zur Herstellung von Lösungen von Farbstoffen der allgemeinen Formel

$$\left[ A{-}CH{=}CH{-}\underset{R}{\underset{|}{(N)}}{}_{m}{-}B \right]^{\oplus} X^{\ominus} \qquad (I)$$

worin

m für 0 oder 1,

A für einen isocyclischen oder heterocyclischen aromatischen Rest oder einen Rest der Formel

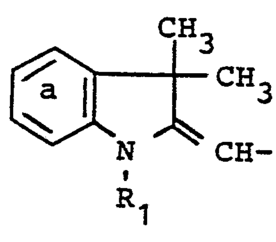

$R_1$ für Alkyl, Alkenyl oder Aralkyl,

B für einen isocyclischen oder heterocyclischen aromatischen Rest oder einen Rest der Formel

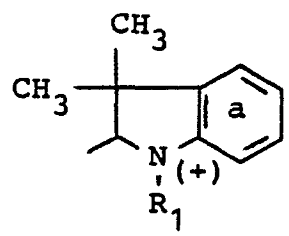

R für Wasserstoff, Alkyl oder Aralkyl oder für Alkylen, das mit B in der o-Stellung zum Stickstoff verbunden ist,

X für ein Anion der Formel

Y $SO_3^{(-)}$ oder 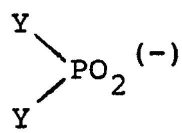 und

Y für Alkyl, Aryl oder Alkoxy

stehen, worin A oder B eine positive Ladung trägt, und worin a, A, B, R, $R_1$, $R_2$ und Y durch nichtionische Reste substituiert sein können, dadurch gekennzeichnet, daß man die Kondensation von Aldehyden der Formel

A-CHO

mit Verbindungen der Formel

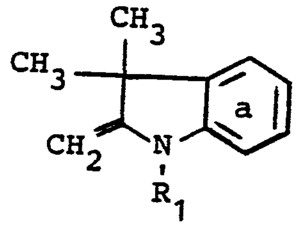

oder von Aldehyden der Formel

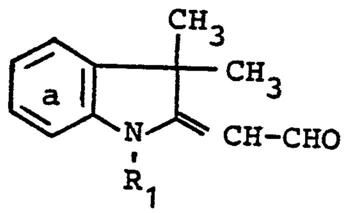

mit Aminen der Formel

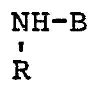

in Gegenwart von Säuren der Formel

$Y\ SO_3H$ oder 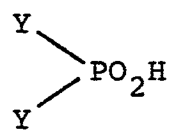

im organischen Lösungsmittel durchführt.

3. Verfahren nach Anspruch 1 zur Herstellung von Lösungen von Farbstoffen der allgemeinen Formeln

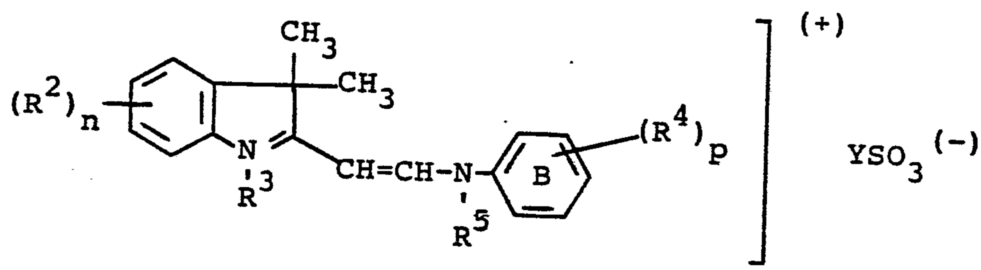

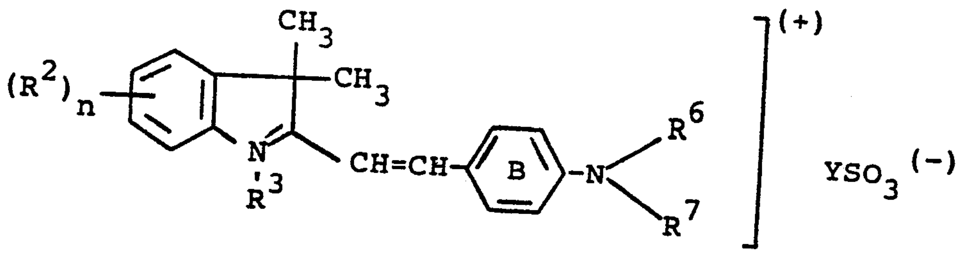

und

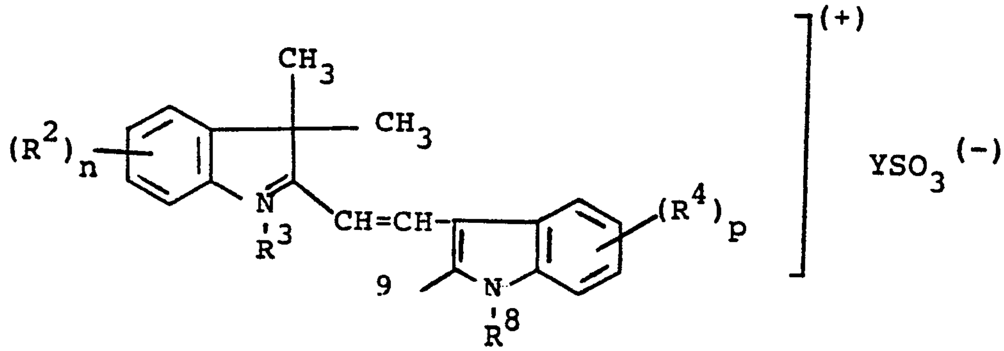

worin

$R^2$ für Wasserstoff, einen Alkylrest mit 1 bis 4 C-Atomen, Halogen, Alkoxy mit 1 bis 4 C-Atomen, Phenoxy, Benzyloxy, Benzyl, Carboxyl, Phenoxyethyl, Phenoxyethoxy, einen Carbonsäurealkylester mit 1 bis 4 C-Atomen, eine gegebenenfalls durch 1 oder 2 $C_1$- bis $C_4$-Alkylreste substituierte Carbonamidgruppe, eine gegebenenfalls durch 1 oder 2 $C_1$- bis $C_4$-Alkylreste substituierte Sulfonamidgruppe, Alkylsulfonyl mit 1 bis 4 C-Atomen, Phenylsulfonyl, eine Cyan-, Trifluormethyl-, Acetyl- oder Benzoylgruppe,

$R^3$ für einen gegebenenfalls durch Hydroxy, Alkoxy, Acyloxy, Halogen, Cyan, Carboxy, $C_1$- bis $C_4$-Carbalkoxy, Carbonamido oder Acetyl substituierten Alkylrest mit 1 bis 4 C-Atomen stehen,

$R^4$ die gleiche Bedeutung wie $R^2$ hat oder zusammen mit dem Benzolring B ein Tetralin-, Naphthalin- oder Benzdioxanringsystem bildet,

$R^5$ für Wasserstoff oder einen Alkylsubstituenten, der einen 5- oder 6-gliedrigen Ring zur benachbarten Stellung des Arylringes B schließt, wobei dieser dabei gebildete heterocyclische 5- oder 6-gliedrige Ring gegebenenfalls alkylsubstituiert oder mit einem weiteren carbocyclischen Ring kondensiert sein kann,

$R^6$ für Wasserstoff oder einen Rest mit der gleichen Bedeutung wie $R^3$,

$R^7$ die gleiche Bedeutung wie $R^6$ haben kann, oder für gegebenenfalls durch Alkyl oder Alkoxy mit 1 bis 4 C-Atomen substituiertes Phenyl steht, oder für einen Alkylsubstituenten, der einen 5- oder 6-gliedrigen Ring zu benachbarten Stellung des Arylringes B schließt, wobei dieser dabei gebildete heterocyclische 5- oder 6-gliedrige Ring gegebenenfalls alkyl-substituiert oder mit oder mit einem weiteren carbocyclischen Ring kondensiert sein kann, steht,

$R^8$ für Wasserstoff, $C_1$ bis $C_4$-Alkyl,

$R^9$ für Wasserstoff, $C_1$ bis $C_4$-Alkyl, gegebenenfalls durch Alkyl mit 1 bis 4 C-Atomen substituiertes Phenyl stehen,

Y die in Anspruch 2 genannte Bedeutung hat und

n und p für 1 oder 2 stehen.

4. Verfahren nach Anspruch 1 zur Herstellung von Lösungen von Farbstoffen der Formeln des Anspruchs 3, worin

n und p für 1 stehen,

$R^2$ für Wasserstoff, Chlor, Methyl, Methoxy, Ethoxy, Benzyl, Phenoxy, Benzyloxy oder Carbomethoxy,

$R^3$ für Methyl,

$R^4$ für Wasserstoff, Methyl, Methoxy, Ethoxy, Benzyl, Benzyloxy, Phenoxy, Chlor, $C_1$- bis $C_2$-alkylsubstituiertes Carbonamid oder zusammen mit dem Ring B für ein Naphthalin-, Tetrahydronaphthalin- oder Benzdioxanringsystem,

0113920

$R^5$ für Wasserstoff oder bevorzugt für einen Alkylrest, der zur o-Stellung des Ringes B einen 5- oder 6-Ring schließt, der durch 1 bis 3 $C_1$- bis $C_2$-Alkylgruppen substituiert oder mit einem Cyclohexanring kondensiert sein kann, stehen,

$R^6$ für Wasserstoff, Methyl oder Ethyl,

$R^7$ für Wasserstoff, Methyl, Ethyl, Phenyl, durch Alkyl oder Alkoxy mit 1 bis 2 C-Atomen substituiertes Phenyl oder einen Phenylrest, der orthoständig zum Ring B kondensiert ist,

$R^8$ für Wasserstoff, Methyl oder Ethyl und

$R^9$ für Methyl oder Phenyl stehen.

5. Verfahren nach Anspruch 1, dadurch gekennzeichnet, daß man die Kondensation in Gegenwart der Säuren der Formeln des Anspruchs 2 durchführt, in denen

Y für einen Alkoxyrest mit 1 bis 4 C-Atomen, einen gegebenenfalls durch 1 bis 3 Alkylreste mit 1 bis 4 C-Atomen, Alkoxyreste mit 1 bis 4 C-Atomen, Halogen oder Hydroxyl substituierten Phenylrest oder einen $C_1$- bis $C_4$-Alkylrest steht.

6. Verfahren nach Anspruch 1, dadurch gekennzeichnet, daß man die Kondensation in Amiden niederer aliphatischer Carbonsäuren durchführt.

7. Verfahren nach Anspruch 1, dadurch gekennzeichnet, daß man die Kondensation in Dimethylformamid, Diethylformamid oder Dimethylacetamid durchführt.

8. Verwendung der nach Anspruch 1 hergestellten Lösungen zum Spinnfärben von sauer modifizierten Synthesefasern.